# DEMANDE DE BREVET EUROPEEN

(11) **EP 0 764 551 A1**
(43) Date de publication de la demande: **26.03.1997**
(21) Numéro de dépôt: 96111828.8
(22) Date de dépôt: 23.07.1996
(51) Int. Cl.: B60B 1/04, B60B 27/02

(54) **Moyeu de roue notamment pour cycle**

(30) Priorité: 22.09.1995 FR 9511294
(71) Demandeur: MAVIC S.A., 01990 Saint-Triviers sur Moignans (FR)
(72) Inventeur: Feche, Pierre, 74960 Cran Gevrier (FR)
(74) Mandataire: Lejeune, Benoit

(57) **Abrégé**

L'invention concerne un moyeu de roue comprenant un arbre transversal (2), un corps de moyeu (3) monté en rotation libre autour de l'arbre, le corps de moyeu présentant à chacune de ses extrémités un renflement (5, 6) définissant un logement interne, et pourvu du côté de son extrémité d'une pluralité de fentes (16, 17) prévues pour recevoir des rayons (19, 20). Le moyeu est caractérisé par le fait qu'il présente à l'intérieur de chaque renflement (5, 6) une bague intermédiaire (25, 26), dont les dimensions extérieures sont égales aux dimensions internes du logement définies par le renflement, la bague étant pourvue d'ouvertures (28, 29) qui sont prévues pour recevoir les rayons, et dont la position coïncide avec la position des fentes (16, 17) du renflement.

## Description

L'invention concerne un moyeu de roue, notamment de roue de cycle. Elle concerne également un ensemble intermédiaire formé par ledit moyeu et deux nappes de rayons, ainsi qu'une roue équipée d'un tel ensemble.

De façon connue, une roue de cycle présente une jante prévue pour recevoir un pneu ou un boyau. Elle présente également un moyeu qui permet la rotation de la jante et qui sert à relier la roue au cadre du cycle. La jante et le moyeu sont reliées par deux nappes de rayons. Les rayons sont reliés par des têtes de rayon à deux renflements ou flasques situés aux extrémités du moyeu. Ils sont reliés à la jante par des extrémités filetées sur lesquelles sont vissés des écrous engages dans des orifices de la jante.

Il existe des rayons dont la tête est coudée, ces rayons sont prévus pour être montés sur des moyeux présentant deux flasques en forme de disque perpendiculaire à l'axe de rotation du moyeu. Ces disques sont percés d'orifices axiaux.

Il existe également des rayons droits, dont la tête est dans le prolongement de la tige. De tels rayons supportent des tensions plus élevées que les rayons à tête coudée. Compte tenu de ce fait, ils peuvent être montés selon une direction radiale ou proche d'une direction radiale, et en nombre réduit, ce qui diminue le poids global de la roue et améliore son aérodynamisme.

De tels rayons posent cependant un problème de montage. En effet, si le moyeu présente des renflements percés d'orifices de montage pour les rayons, il faut y enfiler les rayons selon une direction radiale, la partie filetée en premier. Cette opération est difficile à cause de la longueur de chaque rayon, et de l'axe de rotation du moyeu qui fait généralement saillie au-delà des renflements de montage des rayons.

Pour faciliter le montage des rayons sur le moyeu, il est connu par exemple d'après la demande de modèle d'utilité allemand publiée sous le numéro 87/03618, ou la demande de brevet français publiée sous le numéro 2 653 069 d'engager directement les têtes de rayons dans des ouvertures en forme de boutonnière, ou des gorges approximativement radiales du moyeu. Ces ouvertures, gorges ou fentes dans lesquelles on engage la tête des rayons facilitent le montage de la roue. Mais l'inconvénient est que le moyeu est fragilisé dans les zones de ces ouvertures. En effet, ces ouvertures créent sur le moyeu des zones de faiblesse. En outre, les têtes de rayons tendent à écarter les bords de leur ouverture du fait de leur forme tronconique.

Pour remédier à cet inconvénient, certaines roues présentent des rondelles intermédiaires situées entre la tête de rayon et le moyeu. Ces rondelles répartissent les contraintes de liaison entre le rayon et le moyeu sur une plus grande surface du moyeu. Leur inconvénient est cependant qu'elles compliquent le montage, en effet, elles augmentent fortement le nombre de pièces nécessaires au montage de la roue. En outre, ces rondelles doivent être maintenues contre les têtes de rayon au moment où les rayons sont engagés sur le moyeu.

Un autre inconvénient est qu'en cas de choc ou de déformation de la jante, il arrive que certains rayons se détendent momentanément, et de ce fait, leur tête peut sortir de leur logement. Pour éviter un tel inconvénient, d'ailleurs, le FR 2 653 069 propose d'usiner les gorges avec une entrée inclinée par rapport au fond de la gorge. Un tel moyeu avec de telles gorges inclinées est toutefois difficile et couteux à réaliser.

Un but de l'invention est de proposer un moyeu amélioré pour rayons droits, qui soit plus simple à fabriquer, et qui offre un meilleur accrochage des rayons sur le moyeu c'est-à-dire qui, une fois la roue montée empêche tout décrochage des têtes de rayons.

Un autre but de l'invention est de proposer un moyeu qui fournisse aux têtes de rayon une assise renforcée.

D'autres buts et avantages de l'invention apparaîtront au cours de la description qui va suivre.

Le moyeu selon l'invention comprend un arbre transversal, un corps de moyeu monté en rotation libre autour de l'arbre transversal. Le corps de moyeu présente à chacune de ses extrémités un logement cylindrique dont la paroi est pourvue de fentes orientées de façon axiale, qui sont prévues pour recevoir les rayons. Le moyeu présente par ailleurs à chacune de ses extrémités une bague prévue pour être engagée dans le logement cylindrique, la bague présentant des ouvertures en correspondance avec les fentes de la paroi du logement.

Selon une autre caractéristique, la bague présente à sa surface interne des logements prévus pour recevoir les têtes de rayon.

Selon un mode préférentiel de mise en oeuvre de l'invention, le diamètre intérieur de la bague est déterminé pour que, une fois en place, les têtes de rayon soient emprisonnées dans une zone définie par leur logement dans la bague et un autre élément du moyeu engagé à l'intérieur de la bague.

L'invention sera mieux comprise en se référant à la description ci-dessous et aux dessins en annexe qui en font partie intégrante.

La figure 1 est une vue de face, en coupe partielle d'un moyeu selon un premier mode de mise en oeuvre de l'invention.

La figure 2 est une vue de face en coupe partielle d'une bague équipant le moyeu de la figure 1.

La figure 3 montre la bague de la figure 1 en vue de côté, coupée par le plan de coupe repéré en AA dans la figure 2.

La figure 4 illustre une variante de mise en oeuvre de l'invention.

La figure 5 représente l'anneau fendu qui assure le maintien des têtes de rayon.

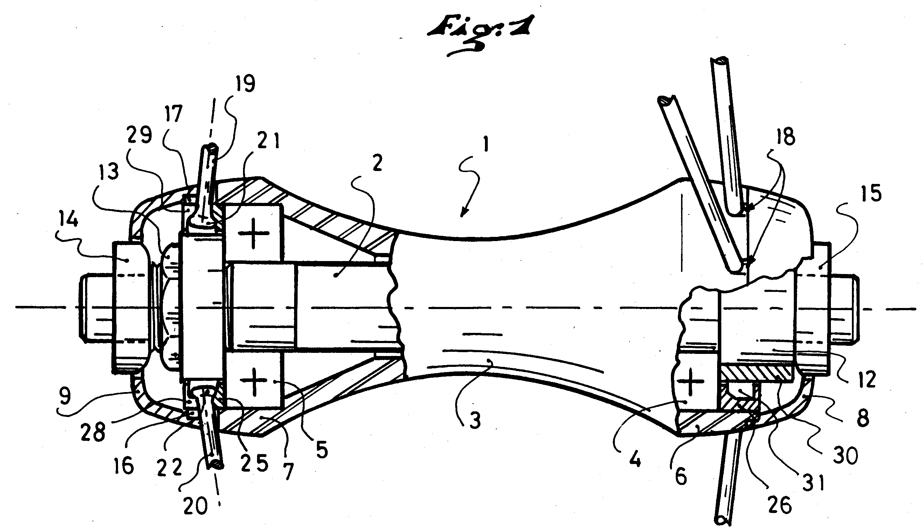

La figure 1 représente en vue de face un moyeu 1. Ce moyeu est prévu pour une roue avant. Toutefois, ceci n'est pas limitatif, et l'invention pourrait aussi bien s appliquer à un moyeu de roue arrière.

Le moyeu présente un arbre transversal 2 qui traverse de part en part un corps de moyeu 3, en faisant saillie à chacune de ses extrémités. Le corps de moyeu est réalisé en tout matériau approprié, par exemple en acier ou en alliage léger. Le corps de moyeu 3 est monté sur l'arbre 2 par l'intermédiaire de deux roulements 4 et 5 qui assurent la libre rotation du corps de moyeu autour de l'arbre. Les roulements 4 et 5 sont logés à l'intérieur de logements cylindriques délimités par deux renflements latéraux 6, 7 que le corps de moyeu 3 présente à chacune de ses extrémités. Les renflements latéraux 6, 7 présentent chacun une ouverture tournée vers l'extérieur du moyeu. Dans le mode de réalisation illustré, ces ouvertures sont obturées par un enjoliveur rapporté 8, 9, assemblé par exemple à force à chacune des extrémités du corps de moyeu. Les bagues externes des roulements 4 et 5 portent sur des épaulements situés à la face interne cylindrique des renflements latéraux 6 et 7.

De préférence, ainsi que cela est connu, l'arbre transversal 2 est creux, et il est prévu pour être traversé par une tige de blocage de roue qui assure l'assemblage de la roue à la fourche du cycle.

Dans le mode de réalisation illustré, l'arbre 2 se présente comme un tube présentant à une de ses extrémités une zone 12 de diamètre supérieur formant un épaulement contre lequel la bague interne du roulement 4 prend appui. A son autre extrémité, l'arbre 2 présente une zone filetée sur laquelle est vissé un écrou de serrage 13 qui prend appui contre la bague interne du roulement 5. L'écrou permet d'ajuster le jeu des roulements entre le corps de moyeu et l'arbre. De préférence, l'écrou 13 présente du côté du roulement 5 une partie de section circulaire, et vers l'extrémité du moyeu une partie de section hexagonale.

Toutefois tout autre moyen approprié convient.

A chacune de ses extrémités, l'arbre 2 présente une coupelle 14, 15 qui est prévue pour prendre appui sur les bras de la fourche du cycle.

Du côté de leur ouverture, les renflements latéraux 6 et 7 présentent des fentes débouchantes et à bords parallèles qui sont prévues pour recevoir des rayons droits, la tête des rayons étant retenue dans les logements délimités par les renflements. Dans le mode de réalisation illustré en figure 1, des fentes 18 sont visibles sur la paroi du renflement 6 et deux fentes 16 et 17 sont visibles sur la paroi du renflement 7. Des rayons 19 et 20 sont engagés dans ces fentes 16 et 17. Leur tête 21, 22, de dimensions supérieures en section est retenue à l'intérieur du renflement 7. Le nombre des fentes par nappe de rayons est variable, il est égal au nombre de rayons. Il peut y avoir par exemple six ou huit rayons par nappe, les rayons des deux nappes étant décalés les uns par rapport aux autres. Ce nombre n'est cependant pas limitatif.

Selon l'invention, les têtes des rayons, en particulier les têtes 21 et 22 des rayons 19 et 20, ne portent pas directement sur la paroi des renflements. Les têtes portent sur une bague de support intermédiaire 25, 26. Le diamètre extérieur de chacune des bagues est prévu pour réaliser un montage ajusté des bagues dans chacun des logements cylindriques défini par les renflements 6 et 7. Le diamètre interne des bagues est supérieur au diamètre de la zone épaulée 12, et aux dimensions hors tout de l'écrou 13, respectivement. Les bagues 25 et 26 sont prévues pour être logées à l'intérieur des renflements 6 et 7, et pour prendre appui contre les bagues externes des roulements 4 et 5. Pour chacun des renflements, de préférence, le roulement et la bague occupent toute la longueur du logement cylindrique défini par la paroi interne du renflement.

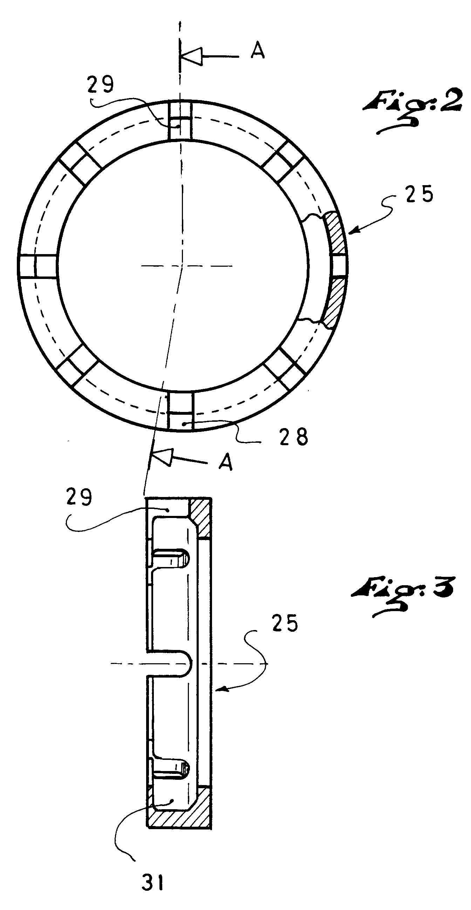

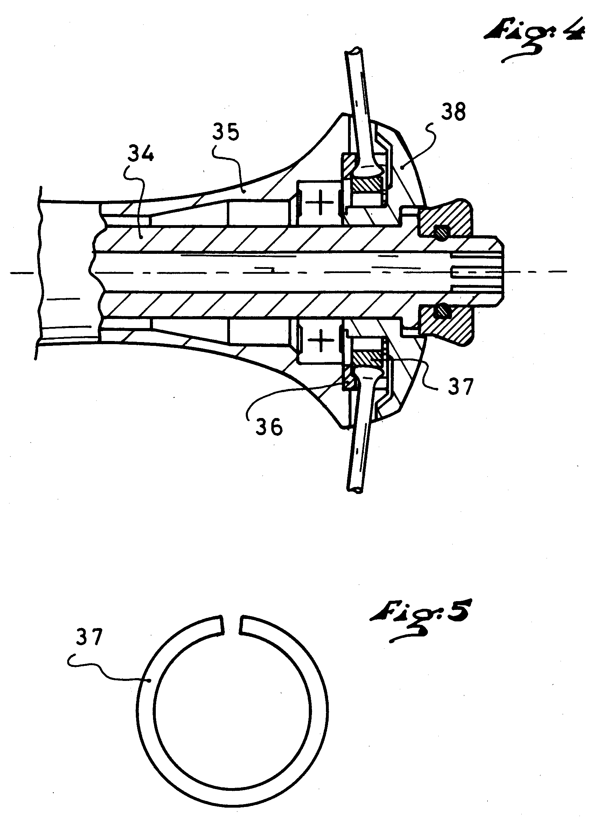

Les bagues 25 et 26 présentent des fentes à bords parallèles dont les dimensions et la disposition sont prévues pour qu'il y ait coïncidence avec les fentes de chacun des renflements. Les figures 2 et 3 représentent une bague, par exemple la bague 25 avec des fentes en nombre égal aux fentes des renflements, dont les fentes 28 et 29 diamétralement opposées qui sont repérées dans la figure 1. Ces fentes sont en coïncidence avec les fentes 16 et 17 du renflement 7, de même que les autres fentes non repérées dans la figure.

De cette façon, pour chacune des nappes de rayons, les tensions des rayons sont supportées par la bague et transmises par la bague à la paroi du corps de moyeu. Ces contraintes sur la paroi du corps de moyeu sont de ce fait réduites ou mieux réparties. Les bagues 25 et 26 augmentent en fait la section de matière qui supporte la tension des rayons. Les bagues sont cependant rapportées, ce qui permet d'avoir un corps de moyeu qui présente une paroi relativement peu épaisse au niveau des renflements. Ceci facilite par ailleurs le montage des différents éléments du moyeu, les roulements notamment.

Dans le mode de réalisation illustré, les fentes des bagues ont leur ouverture située du côté de l'ouverture des fentes des renflements. Ceci n'est pas limitatif, et l'on pourrait avoir une disposition inverse, c'est-à-dire orienter l'ouverture des fentes des bagues vers l'intérieur.

De préférence, les bagues présentent un logement prévu pour recevoir les têtes de rayon. Selon le mode de réalisation illustré dans les figures, chacune des bagues présente à sa face interne une rainure annulaire 31 dont les dimensions en largeur et en profondeur sont sensiblement supérieures aux dimensions hors tout des têtes de rayon. De préférence, vers l'intérieur du moyeu, le fond de la rainure est relevé pour donner une meilleure assise aux têtes de rayon, compte tenu de leur forme tronconique. Selon une variante, l'ensemble de la rainure annulaire 31 est taillé en tenant compte de l'inclinaison des rayons en direction du plan longitudinal médian de la roue, c'est-à-dire que le fond de la rainure situé du côté du roulement est plus relevé que du côté externe. Ainsi, la tête des rayons trouve une bonne assise du côté interne du moyeu, compte tenu de leur inclinaison.

Selon un mode préférentiel de réalisation, lorsque la bague est montée dans le moyeu, son ouverture interne est obstruée, au moins partiellement, de façon à empêcher un mouvement des rayons selon une direction radiale, et en particulier, à empêcher que les rayons sortent des fentes au cas où ils seraient détendus.

En se reportant à la figure 1, du côté du renflement 7, il est visible que la bague 25 présente un diamètre interne qui est légèrement supérieur au diamètre de la partie cylindrique de l'écrou 13, de façon à laisser entre l'écrou et la bague un espace réduit qui empêche un mouvement radial des rayons, et en particulier qui empêche chaque rayon de se dégager de sa fente.

De l'autre côté, au niveau du renflement 6, une douille 30 a été rapportée sur la zone de diamètre supérieur 12, le diamètre externe de la douille est légèrement inférieur au diamètre interne de la bague. De cette façon, l'espace entre la douille et la bague ne permet pas aux rayons de s'échapper une fois la bague montée dans le renflement.

La douille 30 est réalisée en tout matériau approprié et elle est maintenue en place par tout moyen approprié.

Naturellement, ceci n'est pas limitatif, et l'on pourrait se passer de la douille 30, par exemple en augmentant le diamètre extérieur de la zone 12 de l'arbre, ou en diminuant le diamètre interne de la bague 26.

Toutefois, selon un mode de mise en oeuvre préféré de l'invention, les bagues 25 et 26 sont montées avec leurs fentes placées en coïncidence avec celles des renflements, c'est-à-dire ainsi que cela est représenté en figure 1. De plus, la douille 30 est amovible, c'est-à-dire qu'elle peut être démontée. Ainsi, si un rayon doit être échangé, par exemple en cas de rupture, on extrait la douille 30, ce qui libère la rainure annulaire de la bague. Le rayon en question peut alors être dégagé, et un autre rayon peut être mis en place. La bague et les autres rayons de la nappe ne bougent pas à cause de la tension de ces rayons. De l'autre côté du moyeu, la même manipulation peut être réalisée en démontant l'écrou 13, puis en le remontant. Cependant, il va de soi que l'écrou peut être remplacé par tout autre moyen approprié, notamment un moyen qui comprendrait une douille amovible comme la douille 30.

Les bagues 25 et 26 sont réalisées en tout matériau approprié, par exemple en acier ou en alliage léger.

Le montage de la roue se fait de la façon suivante, les nappes de rayons sont préparées, chaque rayon étant engagé dans la fente d'une bague, puis les bagues avec les rayons sont mises en place dans les logements définis par les renflements latéraux. L'écrou 13 et la douille 30 se trouvent alors engagés à l'intérieur de la bague et obturent de ce fait leur ouverture annulaire. On pense que le montage de la roue est ainsi facilité car une fois les bagues mises en place dans leur logement, les rayons ne peuvent pas s'échapper des fentes dans lesquelles ils sont engagés même s'ils ne sont pas tendus. En particulier, au montage, les rayons qui ne sont pas encore assemblés à la jante restent accrochés au moyeu bien qu'ils ne soient pas du tout sous tension. Un tel mode de montage n'est cependant pas limitatif et tout autre mode de montage pourrait convenir.

De plus, au cours de l'utilisation de la roue, si à la suite d'un choc ou d'une contrainte particulière, la tension d'un rayon diminue au point de le détendre complètement, on est sûr que la tête de rayon restera en place dans son logement.

La figure 4 illustre un autre mode de mise en oeuvre de l'invention. La bague 36 est de même nature que les bagues 25 et 26 précédentes, sauf qu'elle présente une section en "L" à la place d'une section en "U", si bien que la rainure annulaire définie par la bague est ouverte vers l'intérieur de la bague et vers l'extérieur du moyeu. Par sa face verticale, la bague 36 est en appui contre le corps de moyeu 35. Les rayons traversent les fentes du corps de moyeu et de la bague 36. Un anneau 37 expansible maintient les têtes de rayon plaquées dans leur logement, à l'intérieur de la bague 36.

L'anneau 37 représenté en figure 5 est une bague fendue, en matière plastique.

Pour être engagé sur les têtes de rayon, le diamètre de l'anneau 37 doit être diminué. Par réaction élastique, l'anneau se plaque contre les têtes et assure leur maintien dans les fentes de la bague et du corps de moyeu.

Ainsi, si par accident un rayon se casse, sa tête est maintenue dans son logement.

La figure 4 représente par ailleurs un flasque de verrouillage 38 qui est monté sur l'arbre 34.

L'invention n'est pas limitée aux modes de construction qui ont été décrits. De nombreuses variantes sont possibles. En particulier, les éléments qui constituent le moyeu, c est-à-dire l'arbre, le corps de moyeu, les roulements, les renflements pourraient avoir des formes et de dimensions différentes. Ces éléments pourraient aussi être agencés de façon différente.

Concernant les fentes des bagues, il serait possible d'incliner la direction de ces fentes par rapport à la direction axiale définie par l'arbre du moyeu, ou bien de donner aux fentes une forme arrondie ou autre. Il serait aussi possible que les bagues présentent non pas de fentes, mais des orifices. Dans ce cas, de façon avantageuse, les têtes de rayons trouveraient une assise sur toute la périphérie de leur tête. Le montage des rayons dans les bagues se ferait dans ce cas par enfilage. Cette opération serait réalisée toutefois sans problème, étant donné que la partie centrale de la bague est totalement libre.

D'autres variantes sont encore possibles sans pour autant sortir du cadre de l'invention.

Enfin, comme cela a été dit au début de la description, l'invention s'applique à tout type de roue avant ou arrière. Il arrive que les roues arrière présentent deux nappes de rayons de nature différentes. Dans ce cas, l'invention pourrait s appliquer à un côté seulement du moyeu, et à la nappe de rayons qui y sont attachés.

## Revendications

1. Moyeu de roue comprenant un arbre transversal (2), un corps de moyeu (3) monté en rotation libre autour de l'arbre, le corps de moyeu présentant à chacune de ses extrémités un renflement (5, 6) définissant un logement interne, et pourvu du côté de son extrémité d'une pluralité de fentes (16, 17) prévues pour recevoir des rayons, caractérisé par le fait qu'il présente à l'intérieur d'au moins un renflement (5, 6) une bague intermédiaire (25, 26, 36), dont les dimensions extérieures sont égales aux dimensions internes du logement définie par le renflement, la bague étant pourvue d'ouvertures (28, 29) qui sont prévues pour recevoir les rayons, et dont la position coïncide avec la position des fentes (16, 17) du renflement.

2. Moyeu selon la revendication 1, caractérisé par le fait que la bague (25, 26, 36) présente à sa face interne une rainure annulaire (30) prévue pour recevoir les têtes de rayon.

3. Moyeu selon la revendication 2, caractérisé par le fait que le diamètre intérieur de la bague (25, 26) est légèrement supérieur au diamètre d'un élément du moyeu qui se trouve engagé à l'intérieur de la bague, de façon à obturer au moins en partie la rainure annulaire (31) une fois la bague en position dans son logement.

4. Moyeu selon la revendication 3, caractérisé par le fait que ledit élément est la partie cylindrique d'un écrou de serrage (13) du corps de moyeu (3) sur l'arbre (2).

5. Moyeu selon la revendication 3, caractérisé par le fait que l'élément est une douille cylindrique (30) rapportée sur une partie de l'arbre.

6. Moyeu selon la revendication 2, caractérisé par le fait qu'un anneau expansible (37) est prévu pour être engagé dans la bague de façon à se plaquer contre les têtes de rayon, une fois les rayons montés.

7. Ensemble formé par un moyeu et deux nappes de rayons droits attachés au moyeu, caractérisé par le fait qu'il comprend un moyeu selon l'une quelconque des revendications précédentes.

8. Roue de cycle caractérisée par le fait qu'elle présente un ensemble selon la revendication 6.
